# EUROPÄISCHE PATENTSCHRIFT

(11) **EP 1 937 026 B1**
(45) Veröffentlichungstag und Bekanntmachung des Hinweises auf die Patenterteilung: **11.07.2012**
(21) Anmeldenummer: 07123007.2
(22) Anmeldetag: 12.12.2007
(51) Int. Cl.: H04W 72/08

(54) **Verfahren und Vorrichtung zur Anpassung einer Kommunikationsverbindung in einem Kommunikationsnetz**
Method and apparatus for adapting a communication connection in a communication network
Procédé et appareil d'adaptation d'une liaison de communication dans un réseau de communication

(30) Priorität: 19.12.2006 DE 102006060513
(43) Veröffentlichungstag der Anmeldung: 25.06.2008
(73) Patentinhaber: Vodafone Holding GmbH, 40213 Düsseldorf (DE)
(72) Erfinder: Lu, Yang, 40489, Düsseldorf (DE); Wild, Peter, 47807, Krefeld (DE); Bösinger, Michael, 41352, Korschenbroich (DE)
(74) Vertreter: Vogel, Andreas

(56) Entgegenhaltungen:
- EP-A- 0 641 093
- EP-A- 0 847 220
- US-A- 5 978 380
- US-A1- 2003 007 456
- US-A1- 2006 067 270

## Beschreibung

Die Erfindung betrifft ein Verfahren zur Anpassung einer Kommunikationsverbindung in einem Kommunikationsnetz, mit einer ersten Netzeinheit, einer zweiten Netzeinheit und einer ersten Kommunikationsverbindung, wobei die erste Kommunikationsverbindung eine erste Kanalkapazität aufweist, wobei wenigstens ein Datenpaket von der ersten zur zweiten Netzeinheit über die erste Kommunikationsverbindung übertragen wird, wobei das Datenpaket in der ersten Kommunikationsverbindung eine Datenübertragungsrate aufweist.

In bekannten Kommunikationsnetzen ist die Kanalkapazität eine entscheidende Größe, denn die Kanalkapazität bezeichnet die maximale Datenmenge, die innerhalb einer Zeiteinheit über eine Verbindung übertragen werden kann.

Einerseits muss eine angemessene große Kanalkapazität bereitgestellt werden, um die auftretenden Datenmengen schnell und zuverlässig übertragen zu können. Andererseits werden hohe Kanalkapazitäten nur durch den Einsatz von kostenintensiver Technik erreicht. Somit sollte das Kommunikationsnetz nur Verbindungen aufweisen, die eine möglichst geringe überschüssige Kanalkapazität aufweisen, da diese sonst nur Kosten verursachen.

In bekannten Kommunikationsnetzen finden häufig verschiedenartige Kommunikationstechniken Anwendung, die oft unterschiedliche Kanalkapazitäten aufweisen. Jede von einem Benutzer gewählte Kommunikationstechnik bindet dabei eine feste Ressource im Kommunikationsnetz. Als nachteilig hat es sich allerdings herausgestellt, dass die zur Verfügung stehenden Kanalkapazitäten der gewählten Kommunikationstechniken von den Benutzern häufig nur unvollständig genutzt werden. So bietet beispielsweise eine DSL-Leitung (Digital Subscriber Line) eine sehr hohe Kanalkapazität, die beispielsweise durch ein Telefonat mittels "Voice over IP" nicht ausgelastet Ist.

Ähnlich ungenutzte Ressourcen ergeben sich auch in Mobilfunknetzen, insbesondere zwischen dem UE (User Equipment), dem Access Netzwerk (z.B. BTS, Node B, Base Transceiver Station und BSC, Base Station Controller, Radio Netzwerk Controller) und dem Kemnetz (z.B. MSC Mobile Switching Center bzw. SGSN, Serving GPRS Support Node). Häufig wird zwischen diesen Komponenten eine feste Übertragungsrate für eine Kommunikationsverbindung zur Verfügung gestellt. Als nachteilig hat es sich herausgestellt, dass die zur Verfügung gestellte Kanalkapazität häufig nur eine kurze Zeit oder gar nicht genutzt wird. Folglich sind kostensplelige Ressourcen des Mobilfunknetzes gebunden, ohne dabei vollständig ausgeschöpft zu werden.

Aus der US 2003/0007456 A1 ist zum Beispiel ein drahtloses Kommunikationssystem bekannt, welches eine variable Bandbreite eines Kommunikationskanals ermöglicht. Dabei wird die Bandbreite des Kommunikationskanals variiert, indem rein technische Parameter untersucht werden. Dies hat zur Folge, dass unabhängig von extrinsischen Faktoren, wie zum Beispiel der Wirtschaftlichkeit der Nutzung eines Kommunikationssystems, die Variation durchgeführt wird.

Aufgabe der Erfindung ist es, ein Verfahren zur Anpassung einer Kommunikationsverbindung in einem Kommunikationsnetz zu schaffen, welches die vorgenannten Nachteile vermeidet und dabei insbesondere eine dynamische Anpassung an die tatsächliche Datenrate ermöglicht.

Die Aufgabe wird erfindungsgemäß durch ein Verfahren zur Anpassung einer Kommunikationsverbindung in einem Kommunikationsnetz mit den Merkmalen gemäß dem unabhängigen Patentanspruch 1 gelöst. In den abhängigen Ansprüchen sind bevorzugte Weiterentwicklungen der Erfindung aufgeführt. Darüber hinaus wir die Aufgabe durch eine Vorrichtung gemäß dem unabhängigen Patentanspruch 15 gelöst.

Erfindungsgemäß ist es vorgesehen, dass in einem ersten Schritt eine Auslastung der ersten Kommunikationsverbindung in Abhängigkeit von der ersten Kanalkapazität und der Datenübertragungsrate bestimmt wird, und der Auslastung ein Funktionswert zugeordnet wird, und in einem zweiten Schritt in Abhängigkeit vom Funktionswert von dem Kommunikationsnetz eine Reaktion ausgeführt wird, wobei als Reaktion entweder
(a) die erste Kommunikationsverbindung und die erste Kanalkapazität beibehalten wird, oder
(b) die erste Kommunikationsverbindung beibehalten wird, wobei die erste Kanalkapazität verändert wird.

Der Erfindungsgedanke umfasst somit die Anpassung der Kanalkapazität, um die Kommunikationsverbindung an sich ändernde äußere Bedingung anzupassen. Führt beispielsweise das Datenpaket nur zu einer geringen Auslastung der ersten Kommunikationsverbindung, so reduziert das Kommunikationsnetz die erste Kanalkapazität. Dadurch ist der Anteil an ungenutzter Kanalkapazität verringert und freie Kanalkapazitäten können weiteren Teilnehmern angeboten werden. Dabei beschreibt der Begriff Kanalkapazität die höchstmögliche fehlerfreie Datenübertragungsrate, die auf einer Kommunikationsverbindung erreichbar ist. Diejenige zeitlich gemittelte Rate, mit der eine Datenmenge über die erste Kommunikationsverbindung übertragen wird, soll im Rahmen der Erfindung als Datenübertragungsrate bezeichnet werden. Die Datenübertragungsrate ist Schwankungen unterworfen, welche sich daraus ergeben, dass unterschiedlich große Datenpakete mittels der ersten Kommunikationsverbindung zwischen der ersten und der zweiten Netzeinheit ausgetauscht werden. Sowohl die Kanalkapazität als auch die Datenübertragungsrate werden in bit/s (bits per Second) gemessen.

Um eine verbesserte Anpassung einer Kommunikationsverbindung zu erzielen, zeichnet sich die Erfindung dadurch aus, dass eine zweite Kommunikationsverbindung eine zweite Kanalkapazität aufweist und in dem zweiten Schritt in Abhängigkeit vom Funktionswert von dem Kommunikationsnetz eine Reaktion ausgeführt wird, wobei als Reaktion entweder
(a) die erste Kommunikationsverbindung und die erste Kanalkapazität beibehalten wird, oder
(b) die erste Kommunikationsverbindung beibehalten wird, wobei die erste Kanalkapazität verändert wird, oder
(c) die zweite Kommunikationsverbindung für die Übertragung des Datenpakets gewählt wird.

Im Rahmen der Erfindung besteht für das Kommunikationsnetz die Möglichkeit, neben einer Änderung der ersten Kanalkapazität der ersten Kommunikationsverbindung auch auf die zweite Kommunikationsverbindung auszuweichen. Dabei wenden die erste und zweite Kommunikationsverbindung unterschiedliche Techniken für die Übertragung von Daten in dem Kommunikationsnetz an. So kann beispielsweise die erste Kommunikationsverbindung auf einem GSM (Global System for Mobile Communications) Standard beruhen, während der zweiten Kommunikationsverbindung ein UMTS (Universal Mobile Telecommunications System) Standard zugrunde gelegt ist. Wird in dieser Situation gemäß der aufgezählten Verfahrensschritte erkannt, dass die Auslastung der ersten Kommunikationsverbindung durch das übertragene Datenpaket nahe an der ersten Kanalkapazität liegt, kann das Kommunikationsnetz auf die zweite Kommunikationsverbindung wechseln, die durch die UMTS (Universal Mobile Telecommunications System) Technik eine deutlich höhere Kanalkapazität besitzt.

Bei der Reaktion des Kommunikationsnetzes wird erfindungsgemäß ein Informationssatz berücksichtigt. Dieser Informationssatz beinhaltet Einflussgrößen, die für eine mögliche Änderung der Kommunikationsverbindung bzw. der Kanalkapazität entscheidend sind. Vorzugsweise handelt es sich bei den Einflussgrößen um technische Angaben, die beim Betrieb des Kommunikationsnetzes anfallen. Als vorteilhaft hat es sich herausgestellt, wenn der Informationssatz mindestens eine der folgenden Größen aufweist: die verfügbare erste und/oder zweite Kommunikationsverbindung, die erste und/oder die zweite Kanalkapazität, die Datenübertragungsrate oder ein Maß für eine Verbindungsqualität in den Kommunikationsverbindungen. Das im Rahmen der Dienstgüte (Quality of Service, QoS) bestimmte Maß für die Verbindungsqualität ist bei der Reaktion des Kommunikationsnetzes besonders zu berücksichtigen. Ist die Auslastung dergestalt, dass ein Wechsel auf die zweite Kommunikationsverbindung angebracht erscheint, muss das Kommunikationsnetz im Vorhinein prüfen, ob die zweite Kanalkapazität in der benötigten Übertragungsqualität auch tatsächlich zur Verfügung steht. Je nachdem, was die Prüfung ergibt, kann es sich anbieten, trotz der Auslastung die erste Kommunikationsverbindung beizubehalten.

In einer vorteilhaften Ausgestaltung des erfindungsgemäßen Verfahrens weist der Funktionswert vordefinierte Werte auf. Es besteht somit kein funktionaler Zusammenhang zwischen einem Wert der Auslastung und dem Funktionswert als solchen. Vielmehr kann einem vordefinierten Auslastungsintervall ein Funktionswert zugewiesen sein. Dabei kann der Funktionswert sowohl eine Zahl als auch einen logischen Ausdruck beinhalten. Der logische Ausdruck kann in einer Zeichenkette bestehen, die andeutet, dass eine höhere, geringere oder unveränderte Kanalkapazität für die Übertragung des Datenpaketes benötigt wird.

In einer weiteren Ausgestaltung des erfindungsgemäßen Verfahrens ist die Reaktion des Kommunikationsnetzes auf die Funktionswerte vordefiniert. Die im zweiten Schritt durchgeführten Reaktionen des Kommunikationsnetzes sind somit unabhängig von äußeren und/oder netzinternen Einflüssen. Nach der Übertragung des Funktionswertes ist vorgegeben, wie das Kommunikationsnetz reagiert, wobei keinerlei Spielräume für etwaige Abweichungen von den vordefinierten Reaktionsmustern gegeben sind. Ein so ausgestaltetes Verfahren ist effizient und darüber hinaus einfach in bestehende Kommunikationsnetze zu integrieren. Allerdings ist die Reaktion unflexibel und kann unter gewissen Randbedingungen nicht zur optimalen Anpassung der Kommunikationsverbindung führen. Denn häufig ist neben der Existenz einer zweiten Kommunikationsverbindung bzw. einer veränderten ersten Kanalkapazität für die Reaktion auch entscheidend, ob die angebotene Verbindungsqualität einen Wechsel der Kommunikationsverbindungen bzw. eine Anpassung der Kanalkapazität überhaupt ermöglicht. So kann beispielsweise durch eine Wartungsarbeit die zweite Kommunikationsverbindung überhaupt nicht zur Verfügung stehen, so dass eine starre Reaktion des Kommunikationsnetzes in diesem Fall zu einem Fehler führen würde.

Um solche Fehler zu vermeiden, kann in einer weiteren vorteilhaften Ausführung des Verfahrens die Reaktion des Kommunikationsnetzes auf die Funktionswerte dynamisch sein. Dabei ist unter dem Begriff dynamisch zu verstehen, dass das Kommunikationsnetz neben dem Funktionswert auch weitere Parameter bei der Bestimmung der Reaktion berücksichtigt. So kann beispielsweise trotz eines Funktionswertes, der eine Reaktion gemäß den Schritten (b) oder (c) verlangt, auf eine Veränderung der ersten Kommunikationsverbindung verzichtet werden, da die Parameter anzeigen, dass diese Reaktion nicht zu einer Verbesserung der Kommunikationsverbindung für einen Benutzer führen würde. Da ein Zufluss von Informationen über die entscheidungsrelevanten Parameter zu jener Stelle sichergestellt werden muss, an der die Reaktion des Kommunikationsnetzes bestimmt wird, ist das zuletzt beschriebene Verfahren schwieriger zu implementieren, aber besser an variierende Gegebenheiten anzupassen.

Neben den technischen Einflussgrößen kann der Informationssatz auch nichttechnische Einflussgrößen beinhalten. Bei diesen nichttechnischen Einflussgrößen kann es sich insbesondere um eine Identität und/oder eine zugeordnete Eigenschaft eines Nutzers der ersten und/oder zweiten Kommunikationsverbindung handeln. Die Betreiber von Kommunikationsnetzen bieten einem potentiellen Nutzer unterschiedliche Nutzungsverträge an, die sich durch die angebotenen Leistungen unterscheiden. Insbesondere so genannte Premium-Verträge garantieren einem Nutzer eine bevorzugte Behandlung innerhalb des Kommunikationsnetzes. Diese Vorzugsbehandlung kann sich beispielsweise darin äußern, dass die benötigte Auslastung, welche zu einem Wechsel der Kanalkapazität bzw. der Kommunikationsverbindung führt, geringer ist als jene Grenzauslastung von Standardnutzern. Darüber hinaus ist es auch denkbar, dass die Art der Kommunikation Einfluss auf die Reaktion des Kommunikationsnetzes hat. Handelt es sich bei dem Datenpaket beispielsweise um eine Textnachricht, wie etwa eine SMS (Short Message Service), kann trotz einer hohen Auslastung von einer Änderung der Kommunikationsverbindung und/oder der Kanalkapazität abgesehen werden, da Textnachrichten prinzipiell mit einer niedrigeren Priorität versehen sind.

Die im Informationssatz enthaltenen zugeordneten Eigenschaften des Nutzers können weiter Daten, wie eine monatliche Nutzungsdauer des Mobilfunknetzes oder aber die Art des Kommunikationsgerätes beinhalten, wobei letzteres einen Rückschluss auf die zu erwartende Datenübertragungsrate zulässt. Erfahrungsgemäß werden PCMCIA (Personal Computer Memory Card International Association) Datenkarten häufig für die Übertragung großer Datenpakete genutzt. Ist dem Kommunikationsnetz bekannt, dass es sich bei dem Nutzer um eine entsprechende Datenkarte handelt, kann diese Information in die Ermittlung der Reaktion einfließen und beispielsweise automatisch eine größere Kanalkapazität bereitgehalten werden.

In einer weiteren vorteilhaften Ausführungsform des erfindungsgemäßen Verfahrens sind die erste und/oder die zweite Kanalkapazität vergrößerbar oder verkleinerbar. Gemäß den oben gemachten Ausführungen passt das Kommunikationsnetz als Reaktion auf den Funktionswert die Kanalkapazität an die Auslastung an, wobei eine Vergrößerung oder eine Verkleinerung der Kanalkapazität die benötigte Abstimmung ermöglicht. Beispielsweise kann die erste Kanalkapazität durch einen Wechsel in der Übertragungstechnik vergrößert werden. So erzielt eine normale GSM-Verbindung eine Kanalkapazität von etwa 10 kBit/s. Reicht diese erste Kanalkapazität nicht aus, ist es möglich durch einen paketorientierten Datentransferdienst (General Paket Radio Service, GPRS) in einem GSM-Netz die erste Kanalkapazität auf bis zu 170 kBit/s zu erhöhen.

Eine weitere vorteilhafte Ausführungsvariante des erfindungsgemäßen Verfahrens zeichnet sich dadurch aus, dass die Auslastung mit einem oberen Grenzwert und einem unteren Grenzwert der ersten Kanalkapazität verglichen wird und je nach dem, ob die Auslastung innerhalb oder außerhalb der Grenzwerte liegt, der entsprechende Funktionswert bestimmt wird. Vorteilhafterweise werden diese Grenzwerte zu jener Vorrichtung übersandt, die die Reaktion des Kommunikationsnetzes auf den Funktionswert bestimmt. Dadurch ist sichergestellt, dass technische oder sonstige Veränderungen in den Grenzwerte ihren Niederschlag finden können und eine schnelle Umsetzung im Rahmen des erfindungsgemäßen Verfahrens erzielt wird. Da erfahrungsgemäß mit steigender Auslastung die Fehlerwahrscheinlichkeit in einer Kommunikationsverbindung steigt, kann der obere Grenzwert dadurch festgelegt sein, dass die erzielte Fehlerrate noch tolerabel oder durch andere Fehlerprüfmechanismen ausgeglichen werden kann. Überschreitet die Auslastung diesen oberen Grenzwert, reagiert das Kommunikationsnetz entsprechend des erfindungsgemäßen Verfahrens. Im Gegensatz dazu kann der untere Grenzwert eher durch betriebswirtschaftliche Überlegungen bestimmt sein, da es sich bei einer Kommunikationsverbindung, die nur unzureichend genutzt wird, um eine brachliegende Ressource handelt.

Eine weitere vorteilhafte Variante zeichnet sich damit aus, dass in dem zweiten Schritt:
(1) bei einer Auslastung oberhalb des oberen Grenzwertes die erste Kanalkapazität der ersten Kommunikationsverbindung erhöht wird oder die zweite Kommunikationsverbindung mit der zweiten Kanalkapazität für die Übertragung des Datenpakets betrieben wird, wobei die zweite Kanalkapazität größer als die erste Kanalkapazität ist, oder
(2) bei einer Auslastung unterhalb des unteren Grenzwertes die erste Kanalkapazität der ersten Kommunikationsverbindung verringert wird oder die zweite Kommunikationsverbindung mit der zweiten Kanalkapazität für die Übertragung des Datenpakets betrieben wird, wobei die zweite Kanalkapazität kleiner als die erste Kanalkapazität ist, oder
(3) bei einer Auslastung, die zwischen den Grenzwerten liegt, weder die erste Kanalkapazität noch die erste Kommunikationsverbindung verändert wird oder die zweite Kommunikationsverbindung mit der zweiten Kanalkapazität für die Übertragung des Datenpakets betrieben wird.

Im Rahmen des erfindungsgemäßen Verfahrens passt das Kommunikationsnetz seine Reaktion der Größe des Datenpaketes an. Durch die Verwendung zweier Kommunikationsverbindungen sowie zweier Kanalkapazitäten kann das Kommunikationsnetz abwägen, welche der beiden genannten Reaktionen (a), (b) oder (c) die jeweils vorteilhafteste ist.

Vorteilhafterweise handelt es sich bei dem Kommunikationsnetz um ein Telekommunikationsnetz, wobei das Kommunikationsnetz kabelgebundene und/oder drahtlose Kommunikationsverbindungen aufweist. Moderne Kommunikationsnetze besitzen vielerlei Kommunikationsverbindungen, die zum Teil nach unterschiedlichsten Standards betrieben werden. So arbeiten kabelgebundene Kommunikationsverbindungen etwa nach einem ISDN (Integrated Services Digital Network) und/oder DSL-Standard. Für solcherlei kabelgebundene Kommunikationsverbindungen bietet sich das erfindungsgemäß Verfahren insbesondere dann an, wenn diese für den Zugriff auf das Internet genutzt werden, da dabei sehr große Schwankungen in der Auslastung auftreten.

Das erfindungsgemäße Verfahren ist vorteilhafterweise auch in Mobilfunknetzen anwendbar. Mobilfunknetze werden heutzutage insbesondere für die private Kommunikation mit Mobiltelefonen genutzt, welche innerhalb des Mobilfunknetzes bewegt werden können, ohne das es dabei zu einem Abbruch der Kommunikationsverbindung kommt. Technisch ist das Mobiltelefon über eine drahtlose Kommunikationsverbindung - die so genannte Luftschnittstelle - mit einer Infrastruktur des Mobilfunknetzes verbunden. Im Allgemeinen sind die einzelnen Elemente der Infrastruktur durch Kabel untereinander verbunden, so dass ein Mobilfunknetz sowohl kabelgebundene als auch drahtlose Kommunikationsverbindungen aufweist. Zusätzlich können die Kommunikationsverbindungen im Mobilfunknetz auf unterschiedlichen Techniken basieren. So kann etwa die erste und/oder zweite Kommunikationsverbindung auf mindestens einer der folgenden Techniken aufbauen: WLAN (Wireless Local Area Network), 3GPP (3rd Generation Partnership Project), 2G-GSM (2nd Generation GSM), 3G-UMTS (3rd Generation UMTS), 3GPP-LTE (3rd Generation Mobile System - Long Term Evolution), WiMAX (Worldwide Interoperability for Microwave Access), FLASH-OFDM (Fast Low-latency Access with Seamless Handoff - Orthogonal Frequency Division Multiplexing) oder 3GPP2 (3rd Generation Partnership Project 2).

Vereinfacht dargestellt besteht die Architektur eines Mobilfunknetzes aus einem Benutzerendgerät (User Equipment, UE), einem Zugangsnetz (Access Network) und einem Kernnetz (Core Network, CN). Dabei enthält das Kernnetz alle Mechanismen für eine Übertragung der Datenpakete an andere Systeme oder Schnittstellen, wie etwa zu anderen Fest- oder Mobilnetzen. Die Verbindung zwischen dem Kernnetz und dem Benutzerendgerät wird durch das Zugangsnetz sichergestellt. Da das erfindungsgemäße Verfahren zur Anpassung einer Kommunikationsverbindung vorteilhaft im gesamten Mobilfunknetz ist, kann die erste Netzeinheit ein Zugangsnetz (Access Network) und die zweite Netzeinheit ein Benutzerendgerät (User Equipment, UE) sein und/oder die erste Netzeinheit ein Kernnetz (Core Network, CN) und die zweite Netzeinheit ein Zugangsnetz (Access Network).

Um eine drahtlose Kommunikationsverbindung zu einem Benutzerendgerät sicherzustellen, weist das Mobilfunknetz eine Anzahl von Sende-/Empfangsstationen (Base Transceiver Station; BTS) auf. Eine BTS erhält alle funktechnischen Einrichtungen wie Antennen, Signalverarbeitung und Verstärker für die Übertragung der Datenpakete über die Luftschnittstelle. Mehrere dieser BTS werden durch ein Feststationssystem (Base Station Subsystem, BSS) gesteuert. Dabei umfasst die BSS alle Funktionen, die für eine permanente Funkverbindung zu dem Benutzerendgerät notwendig sind. Eine Vielzahl von BSS sind wiederum zusammengefasst zu einem Funk-Feststationsystem (Radio Subsystem, RSS). Das erfindungsgemäße Verfahren ist vorteilhafterweise für beliebige zwei Netzeinheiten innerhalb eines RSS anwendbar. Vorzugsweise kann es sich bei der ersten Netzeinheit um eine BTS und bei der zweiten Netzeinheit um ein Benutzerendgerät handeln. Gleichfalls ist es denkbar, dass die erste Netzeinheit eine BSC und die zweite Netzeinheit eine BTS ist.

Wird das Mobilfunknetz nach einem GSM-Standard betrieben, hat es sich als besonders vorteilhaft erwiesen, wenn das erfindungsgemäße Verfahren in die Schicht 2, die so genannte Sicherungsschicht, der GSM Protokollarchitektur integriert wird. Die Schicht 2 dient u.a. zur Synchronisation sowie zur Fehlererkennung der in der Schicht 1 übertragenen Daten. Durch zusätzliche, in dieser Schicht laufende Protokolle kann das erfindungsgemäße Verfahren realisiert werden.

Neben den schon genannten Informationen und Einflussgrößen zeichnet sich eine weitere vorteilhafte Ausführungsform des Verfahrens dadurch aus, dass bei der Bestimmung des Funktionswertes mindestens eine intrinsische und/oder mindestens eine extrinsische Variable berücksichtigt werden, wobei insbesondere die intrinsische Variable mindestens eine der folgenden Größen ist:
eine Pufferspeichergröße, die genutzte erste oder zweite Kommunikationsverbindung, die erste und/oder zweite Kanalkapazität, die Datenübertragungsrate oder eine Verbindungsqualität
und die extrinsische Variable wenigstens eine der folgenden Größen ist:
die zugeordnete Eigenschaft des Nutzers, eine Verlustrate, eine Genauigkeitsschwankung in einem Übertragungstakt oder eine Verzögerungszeit.

Ferner wird die erfindungsgemäße Aufgabe durch eine Vorrichtung mit den Merkmalen gemäß dem unabhängigen Patentanspruch 15 gelöst. Die Erfindung betrifft eine Vorrichtung zur Anpassung einer Kommunikationsverbindung in einem Kommunikationsnetz, mit einer ersten Kommunikationsverbindung, wobei wenigstens ein Datenpaket über die erste Kommunikationsverbindung übertragbar ist, das Datenpaket in der ersten Kommunikationsverbindung eine Datenübertragungsrate aufweist, die Vorrichtung eine erste Kanalkapazität und die Datenübertragungsrate der ersten Kommunikationsverbindung misst. Dabei ist es erfindungsgemäß vorgesehen, dass ein Rechnermittel eine Auslastung der ersten Kommunikationsverbindung in Abhängigkeit von der ersten Kanalkapazität und der Datenübertragungsrate bestimmt und der Auslastung ein Funktionswert zugeordnet, und die Vorrichtung je nach Funktionswert entweder (a) die erste Kommunikationsverbindung und die erste Kanalkapazität beibehält, oder (b) die erste Kommunikationsverbindung beibehält und die erste Kanalkapazität verändert. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung.

Weitere Maßnahmen, Vorteile, Effekte und Merkmale der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig. 1: eine stark vereinfachte Referenzarchitektur eines Mobilfunknetzes,
- Fig.2: die Referenzarchitektur in einer zweiten Ausführungsvariante,
- Fig. 3: einzelne Elemente eines Zugangsnetzes des Mobilfunknetzes,
- Fig. 4: ein Flussdiagramm zur Darstellung eines ersten Teiles des erfindungsgemäßen Verfahrens,
- Fig.5: ein weiteres Flussdiagramm zur Darstellung eines zweiten Teiles des erfindungsgemäßen Verfahrens und
- Fig. 6: eine schematische Darstellung einer Vorrichtung zur Anpassung einer Kommunikationsverbindung.

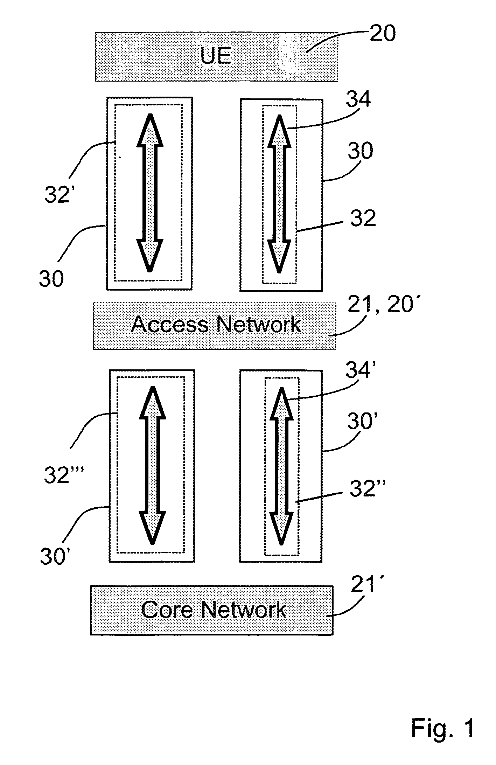

Das erfindungsgemäße Verfahren dient zur Anpassung einer Kommunikationsverbindung 30,30', welche zwischen einer ersten Netzeinheit 20, 20' und einer zweiten Netzeinheit 21, 21' besteht. Als Beispiel für eine solche Kommunikationsverbindung 30,30' ist in Fig. 1 eine stark vereinfachte Referenzarchitektur eines Mobilfunknetzes dargestellt. Die Referenzarchitektur besteht dabei aus drei Komponenten: einem Benutzerendgerät (UE), einem Zugangsnetz (Excess Network) und einem Kernnetz (Core Network). Jeweils zwei der drei Komponenten der Referenzarchitektur können die erste 20, 20' bzw. zweite Netzeinheit 21, 21' bilden. In dem in Fig. 1 dargestellten Ausführungsbeispiel ist das Benutzerendgerät die erste Netzeinheit 20, welche über die Kommunikationsverbindung 30 mit der zweiten Netzeinheit 21, hier dem Zugangsnetz, verbunden ist. Zugleich stellt das Zugangsnetz aber auch die erste Netzeinheit 20' für eine weitere erste Kommunikationsverbindung 30' mit dem Kernnetz dar, das als zweite Netzeinheit 21' fungiert.

Im Folgenden soll das erfindungsgemäße Verfahren vorrangig an der Kommunikationsverbindung 30 zwischen der ersten Netzeinheit 20 und der zweiten Netzeinheit 21 beschrieben werden. Alle dabei gemachten Ausführungen gelten selbstverständlich auch für die Kommunikationsverbindung 30' zwischen dem Zugangsnetz und dem Kernnetz. Die erste Kommunikationsverbindung 30 weist eine erste Kanalkapazität 32 auf, welche die höchstmögliche fehlerfreie Datenübertragungsrate bezeichnet. Übersendet die erste Netzeinheit 20 ein Datenpaket über die Kommunikationsverbindung 30, so ergibt sich auf der Kommunikationsverbindung 30 eine Datenübertragungsrate 34. Die Datenübertragungsrate 34 ist die zeitlich gemittelte Rate, mit der das Datenpaket über die erste Kommunikationsverbindung 30 übertragen wird. Erfindungsgemäß ist in einem ersten Schritt vorgesehen, eine Auslastung der ersten Kommunikationsverbindung 30 zu bestimmen. Als Auslastung wird dabei das Verhältnis der Datenübertragungsrate 34 zur ersten Kanalkapazität 32 bezeichnet. Nähert sich die Datenübertragungsrate 34 der ersten Kanalkapazität 32 an - erreicht also die Kommunikationsverbindung 30 eine nahezu 100%-ige Auslastung - so steigt auch die Wahrscheinlichkeit für einen Fehler bei der Übertragung. Ist im Gegensatz dazu die Auslastung nur sehr gering, so besteht zwischen der ersten und der zweiten Netzeinheit 20, 21 eine ungenutzte Kommunikationsressource. Um die erste Kommunikationsverbindung 30 an die gemessene Auslastung anzupassen, wird dieser Auslastung ein Funktionswert zugeordnet. In Abhängigkeit von dem Funktionswert kann das Kommunikationsnetz in einem zweiten Schritt unterschiedliche Reaktionen ausführen. Zum einen besteht die Möglichkeit, die erste Kommunikationsverbindung 30 und die erste Kanalkapazität 32 beizubehalten. Ist hingegen die gemessene Auslastung zu groß oder zu klein, reagiert das Kommunikationsnetz 10 unter Beibehaltung der Kommunikationsverbindung 30 mit einer Änderung der ersten Kanalkapazität 32. Wie durch die Größe der Rechtecke in Fig. 1 verdeutlicht werden soll, kann das Kommunikationsnetz durch eine Vergrößerung der ersten Kanalkapazität 32' eine Anpassung an die Auslastung vornehmen. Gleiches gilt für die erste Kommunikationsverbindung 30', welche eine erste Kanalkapazität 32" aufweist. Ermittelt das Kommunikationsnetz eine grenzwertige Auslastung, so kann eine Änderung der ersten Kanalkapazität 32", 32''' stattfinden.

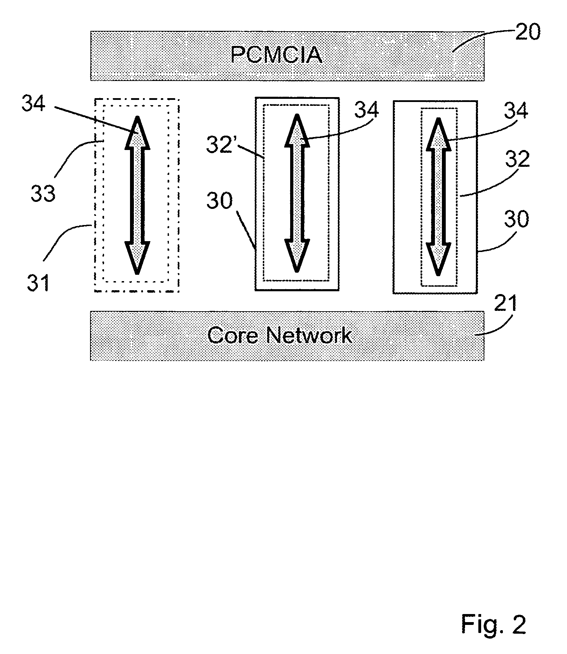

In Fig. 2 ist eine weitere vorteilhafte Ausgestaltung des erfindungsgemäßen Verfahrens dargestellt. Dabei soll zur Verdeutlichung des Verfahrens angenommen werden, dass es sich bei der ersten Netzeinheit 20 um eine PCMCIA-Datenkarte handelt, die in einen Computer integriert ist und insbesondere für die Anbindung des Computers an das Internet dient. Zum Zugriff der Datenkarte 20 auf das Internet bedarf es der ersten Kommunikationsverbindung 30, welche in dem dargestellten Ausführungsbeispiel nach einem GSM-Standard betrieben wird. Möchte ein Benutzer über die Datenkarte 20 ein größeres Datenpaket aus dem Internet laden, erreicht die Datenübertragungsrate 34 schnell die Kanalkapazität 32. Das erfindungsgemäße Verfahren sieht eine Messung dieser Auslastung und eine anschließende Zuordnung eines Funktionswertes vor. Im dargestellten Ausführungsbeispiel ergeben sich für das Kommunikationsnetz drei Möglichkeiten auf die gemessene hohe Auslastung zu reagieren. Einerseits kann das Kommunikationsnetz die erste Kommunikationsverbindung 30 und die erste Kanalkapazität 32 beibehalten. Es würde sich somit nichts an der hohen momentanen Auslastung der ersten Kommunikationsverbindung 30 ändern und eine nicht zu vernachlässigende Wahrscheinlichkeit für das Auftreten von Fehlern in der Kommunikation bestehen. Andererseits kann das Kommunikationsnetz die erste Kommunikationsverbindung 30 beibehalten, aber die erste Kanalkapazität 32 vergrößern. In dem beschriebenen Fall, dass es sich bei der ersten Kommunikationsverbindung 30 um eine GSM-Verbindung handelt, könnte dieses durch die Verwendung eines GPRS Übertragungsdienstes mit der ersten Kanalkapazität 32' realisiert werden. Darüber hinaus besteht erfindungsgemäß die Möglichkeit, dass das Kommunikationsnetz eine zweite Kommunikationsverbindung 31 für die Übertragung des Datenpaketes wählt. Dabei könnte es sich um eine UMTS Kommunikationsverbindung handeln, welche eine zweite Kanalkapazität 33 aufweist. Die so erreichte neue Auslastung der vergrößerten ersten Kanalkapazität 32' oder der zweiten Kanalkapazität 33 wird signifikant unter jener liegen, welche für die ursprüngliche erste Kanalkapazität 32 erreicht wurde.

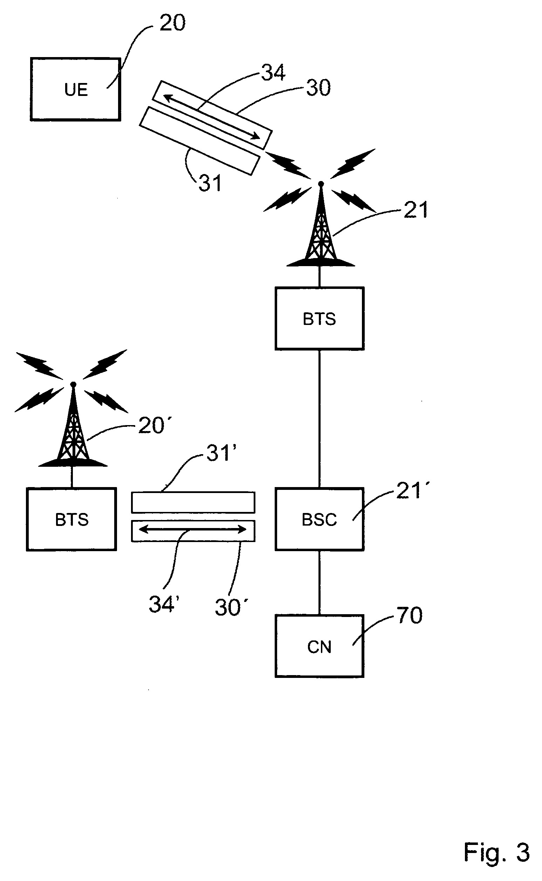

Das Zugangsnetz eines Mobilfunknetzes basiert hauptsächlich auf zwei Komponenten:
der BTS und der BSC, was auch die Fig. 3 verdeutlicht. Dargestellt ist ein Kernnetz 70, welches mit einer BSC verbunden ist. Diese BSC steuert zwei BTS Einheiten, von der eine BTS wiederum über eine Kommunikationsverbindung mit einem Benutzerendgerät 20 verbunden ist. Das erfindungsgemäße Verfahren kann nun einerseits zwischen der BSC und einer BTS Anwendung finden, was in der unteren Hälfte der Fig. 2 gezeigt ist. Man erkennt die erste Netzeinheit 20' - die BTS -, welche über eine erste Kommunikationsverbindung 30' mit der zweiten Netzeinheit 21' - die BSC - in Verbindung steht. Durch die Datenübertragung des Datenpaketes auf der ersten Kommunikationsverbindung 30' entsteht eine Datenübertragungsrate 34'. Eine in der BSC integrierte Vorrichtung kann die Auslastung der ersten Kommunikationsverbindung 30' messen und dieser Auslastung einen Funktionswert zuordnen. Je nach Funktionswert wird ein Wechsel von der ersten 30' auf eine zweite Kommunikationsverbindung 31' initiiert. Dabei weist die zweite Kommunikationsverbindung 31' eine zweite Kanalkapazität 33 auf, die besser an die Größe des zu übertragenden Datenpaketes angepasst ist. Erfindungsgemäß kann die Messung der Auslastung und/oder die Bestimmung des Funktionswertes und/oder die Bestimmung der Reaktion in etwa zeitgleichen Abständen von der beschriebenen Vorrichtung vorgenommen werden. Als vorteilhaft hat es sich erwiesen, wenn die zeitgleichen Abstände zwischen 1 µsek. und 1 min., bevorzugt zwischen einer 1 msek. und 30 sek., besonders bevorzugt zwischen 0,1 sek. und 10 sek. liegen.

In der oberen Hälfte der Fig. 3 ist eine erste Kommunikationsverbindung 30 zwischen einer ersten Netzeinheit 20 - das Benutzerendgerät - und einer zweiten Netzeinheit 21 - die BTS - eingezeichnet. Die erste Kommunikationsverbindung 30 überbrückt folglich die Luftschnittstelle in dem Mobilfunknetz. In dem dargestellten Ausführungsbeispiel kann in der zweiten Netzeinheit 21 die Auslastung der ersten Kommunikationsverbindung 30 bestimmt werden. Ergibt die Zuweisung des Funktionswertes, dass die Auslastung der ersten Kommunikationsverbindung 30 maximal oder minimal ist, kann gemäß dem geschilderten Verfahren ein Wechsel auf die zweite Kommunikationsverbindung 31 stattfinden.

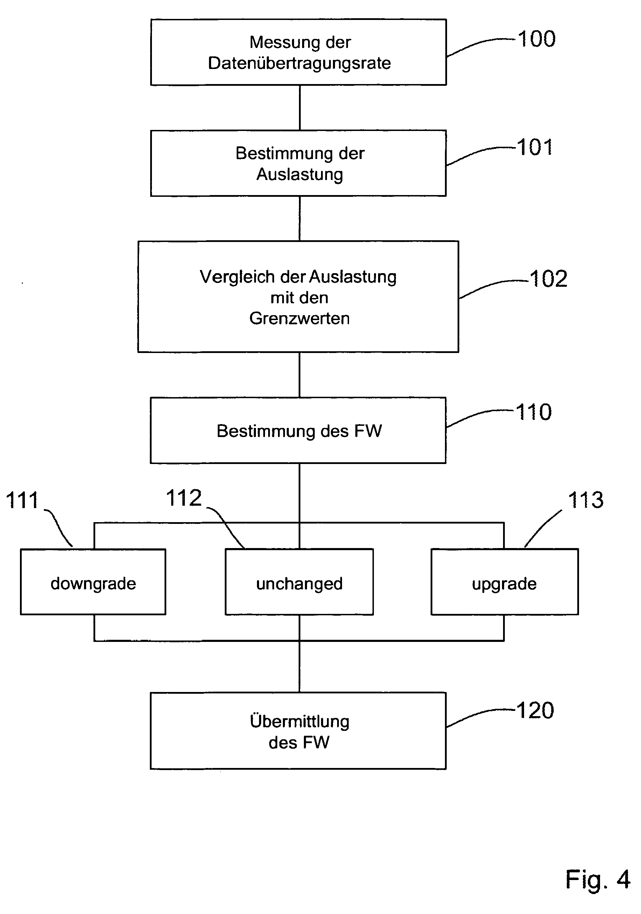

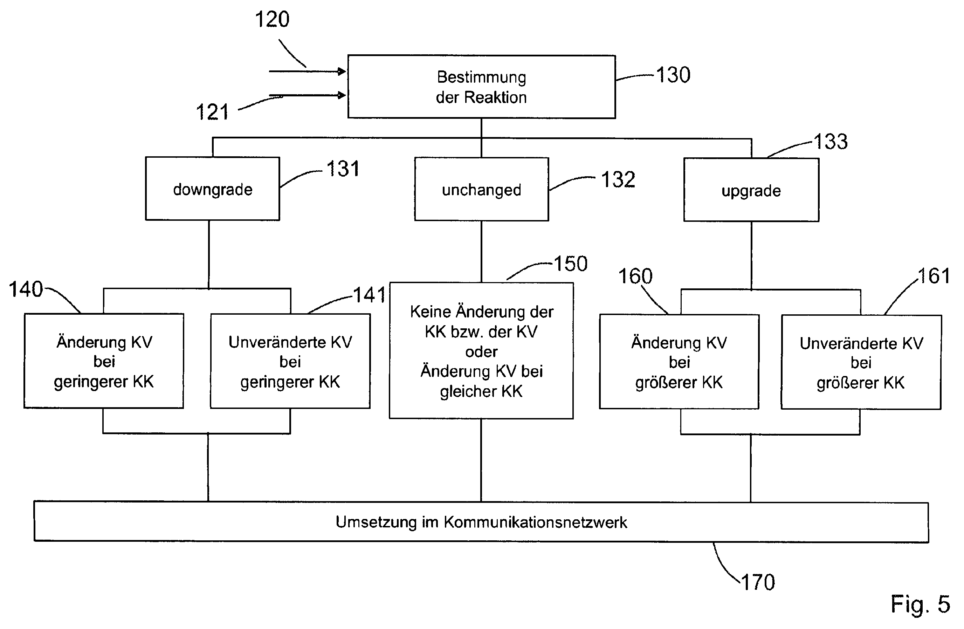

In Fig. 4 und 5 ist jeweils ein Flussdiagramm zur Verdeutlichung des erfindungsgemäßen Verfahrens dargestellt. Nach einer ersten Messung 100 der Datenübertragungsrate bestimmt das Kommunikationsnetz bzw. eine darin integrierte Vorrichtung die Auslastung 101 der ersten Kommunikationsverbindung 30, wozu ein Vergleich mit der ersten Kanalkapazität 32 stattfindet. Um eine Aussage über den Wert der Auslastung zu treffen, können in dem Kommunikationsnetz bzw. der Vorrichtung ein oberer und/oder ein unterer Grenzwert hinterlegt sein. Diese Grenzwerte ergeben sich aus technischen und/oder betriebswirtschaftlichen Überlegungen, in welchem Rahmen der Auslastung die Nutzung der ersten Kommunikationsverbindung 30 noch sinnvoll ist. Durch einen Vergleich 102 der Auslastung mit den beiden Grenzwerten bestimmt das Kommunikationsnetz in einem ersten Schritt 110 einen Funktionswert. Dieser Funktionswert weist in der dargestellten Ausführungsvariante drei mögliche vordefinierte Werte 111,112,113 auf. Jeder dieser drei Werte 111,112,113 dient als Synonym für eine Reaktion des Kommunikationsnetzes. Bestimmt das Kommunikationsnetz den Funktionswert "downgrade" 111, so resultiert dieses aus einer nur sehr geringen Auslastung der Kommunikationsverbindung 30. Folglich kann das Kommunikationsnetz die für die Datenübertragung bereitgestellte erste Kanalkapazität 32 reduzieren. Ergibt sich hingegen aus der Bestimmung 110 der Funktionswert "upgrade" 113, so schöpft das Datenpaket die erste Kanalkapazität 32 fast vollständig aus, so dass sich eine Erhöhung der Kanalkapazität 32 anbietet. Für Auslastungen, welche zwischen den genannten Extremen liegen, ermittelt das Kommunikationsnetz den Funktionswert "unchanged" 112. Der Wert 112 zeigt an, dass es keiner Änderung der Kanalkapazität 32 bedarf.

Im Anschluss an die Bestimmung 110 wird der Funktionswert 120 an das Kommunikationsnetz übermittelt. Wie Fig. 5 verdeutlicht, findet nach dem Empfang des Funktionswertes eine Bestimmung 130 der Reaktion statt. Im Rahmen der Bestimmung 130 der Reaktion des Kommunikationsnetzes kann neben dem Funktionswert 111,112,113 noch ein Informationssatz 121 berücksichtiget werden. Dieser Informationssatz 121 beinhaltet insbesondere eine Reihe technischer und/oder nicht technischer Einflussgrößen. Die Berücksichtigung des Informationssatzes 121 kann zu einer Abweichung von einer vordefinierten Reaktion auf den Funktionswert 111,112,113 führen. So kann der Funktionswert 111,112,113 einen Wechsel der Kommunikationsverbindung nahelegen, aber die zweite Kommunikationsverbindung 31 zu jenem Zeitpunkt nur eine sehr geringe Verbindungsqualität aufweist. Ein Wechsel der Kommunikationsverbindungen 30,31 würde somit zwar theoretisch zu einer Verbesserung der Kanalkapazität 32,33 führen, technisch aber durch die höhere Fehlerwahrscheinlichkeit nicht das Ziel erfüllen. Diese Information bezüglich der Verbindungsqualität führt erfindungsgemäß zu einer Reaktion des Kommunikationsnetzwerkes, die nicht mit der dem Funktionswert 111,112,113 zugeordneten Reaktion entspricht.

Für die technische Realisierung einer Reaktion gibt es erfindungsgemäß mehrere Wege, was die Fig. 5 verdeutlicht. Ergibt die Bestimmung 110 einen Funktionswert "downgrade" 111, so stehen dem Kommunikationsnetz zwei Reaktionen 131 zur Verfügung:
- einen Wechsel 140 von der ersten 30 auf die zweite Kommunikationsverbindung 31 (KV), wobei die zweite Kanalkapazität 33 (KK) kleiner als die erste Kanalkapazität 32 ist, oder
- ein Beibehalten 141 der ersten Kommunikationsverbindung 30 unter gleichzeitiger Verringerung der ersten Kanalkapazität 32.

Für einen Funktionswert "upgrade" 113 bestehen ebenfalls zwei Reaktionsmöglichkeiten 133 des Kommunikationsnetzes:
- einen Wechsel 160 von der ersten Kommunikationsverbindung 30 auf die zweite Kommunikationsverbindung 31, wobei die zweite Kanalkapazität 33 größer als die erste Kanalkapazität 32 ist, oder
- ein Beibehalten 161 der ersten Kommunikationsverbindung 30 unter gleichzeitiger Erhöhung der ersten Kanalkapazität 32.

Erzielt die Bestimmung 110 hingegen einen Funktionswert "unchanged" 112, so besteht für die Reaktion 132 die Möglichkeit 150:
- weder die erste Kanalkapazität 32 noch die erste Kommunikationsverbindung 30 zu verändern, oder
- die zweite Kommunikationsverbindung 31 mit einer zweiten Kanalkapazität 33 für die Übertragung des Datenpaketes zu betreiben.

Bei der zuletzt aufgezählten Variante kann die zweite Kanalkapazität 33 etwa gleich der ersten Kanalkapazität 32 sein. Im Anschluss an die Bestimmung 130 der Reaktion des Kommunikationsnetzes sowie deren optimaler Umsetzung 140,141,150,160,161 erfolgt eine Realisierung 170 im Kommunikationsnetz.

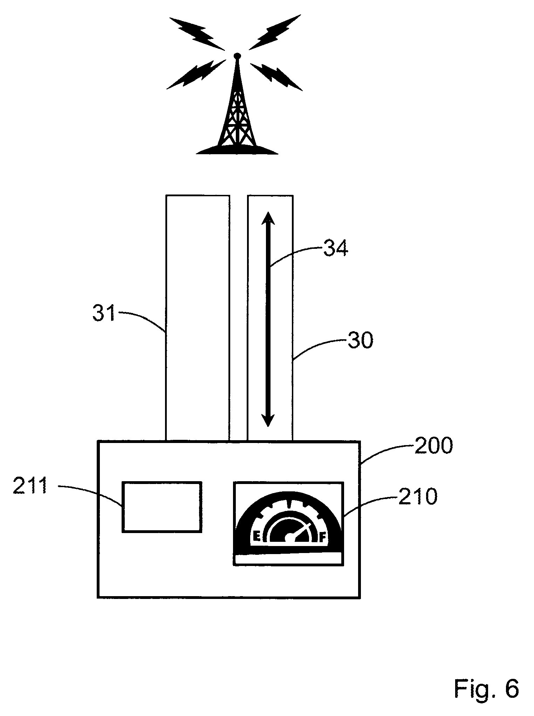

In Fig. 6 ist eine Vorrichtung 200 dargestellt, welche das erfindungsgemäße Verfahren in einem Kommunikationsnetz umsetzt. Solche Art Vorrichtungen 200 lassen sich beispielsweise innerhalb des Zugangsnetzes in eine BSC und/oder BTS integrieren. Die Vorrichtung 200 weist ein Rechnermittel 210 sowie eine Sende-/Empfangseinheit 211 auf. Das Rechnermittel 210 ermittelt die Auslastung der Kommunikationsverbindung 30, über welche das Datenpaket versendet wird. Im Anschluss daran ordnet das Rechnermittel 210 der Auslastung einen Funktionswert 111,112,113 zu. Für diese Zuordnung kann es zweier Grenzwerte bedürfen, welche der Vorrichtung 200 über die Sende-/Empfangseinheit 211 vom Kommunikationsnetz übermittelt werden. Die so erhaltenen Daten sind auf einem nicht eingezeichneten Datenspeicher in der Vorrichtung 200 hinterlegt. Im Anschluss an die Bestimmung des Funktionswertes 111,112,113 besteht für die Vorrichtung 200 die Möglichkeit, entweder
(a) die erste Kommunikationsverbindung 30 und die erste Kanalkapazität 32 beizubehalten, oder
(b) die erste Kommunikationsverbindung 30 beizubehalten und die erste Kanalkapazität 32 zu verändern.

Somit wählt die Vorrichtung 200 aus, ob es vorteilhaft ist, die Kanalkapazität 32 an die Auslastung anzupassen. Darüber hinaus ist es der Vorrichtung 200 auch möglich, die zweite Kommunikationsverbindung 31 für die Übertragung des Datenpaketes zu verwenden. Die dabei zu durchlaufenden Schritte entsprechen denen des erfindungsgemäßen Verfahrens.

Die erfindungsgemäße Vorrichtung 200 kann in ein Element des Kommunikationsnetzes integriert sein und dort die Zuordnung der verfügbaren Kommunikationsverbindungen 30,31 sowie der Kanalkapazitäten 32,33 steuern. In modularen Mobilfunknetzen kann eine Vorrichtung 200 in all jenen Schnittstellen einsetzt werden, in denen ein Wechsel im Übertragungsmedium und/oder im Übertragungsformat stattfindet.

### Bezugszeichenliste

- 20,20': erste Netzeinheit
- 21,21': zweite Netzeinheit

- 30,30': erste Kommunikationsverbindung
- 31,31': zweite Kommunikationsverbindung
- 32,32',32",32"': erste Kanalkapazität
- 33: zweite Kanalkapazität
- 34,34': Datenübertragungsrate

- 70: Kernnetz

- 100: Messung der Senderate
- 101: Bestimmung der Auslastung
- 102: Vergleich der Auslastung mit Grenzwerten

- 110: Bestimmung des Funktionswertes
- 111: Funktionswert "downgrade"
- 112: Funktionswert "unchanged"
- 113: Funktionswert "upgrade"

- 120: Übermittlung des Funktionswertes
- 121: Informationssatz

- 130: Bestimmung der Reaktion
- 131: Reaktion "downgrade"
- 132: Reaktion "unchanged"
- 133: Reaktion "upgrade"

- 140: Änderung Kommunikationsverbindung bei geringerer Kanalkapazität
- 141: Unveränderte Kommunikationsverbindung bei geringerer Kanalkapazität

- 150: Keine Änderung der Kanalkapazität bzw. der Kommunikationsverbindung oder Änderung der Kommunikationsverbindung bei etwa gleicher Kanalkapazität

- 160: Änderung Kommunikationsverbindung bei größerer Kanalkapazität
- 161: Unveränderte Kommunikationsverbindung bei größerer Kanalkapazität

- 170: Umsetzung im Kommunikationsnetz

- 200: Vorrichtung
- 210: Rechnermittel
- 211: Sende-/Empfangseinheit

## Patentansprüche

1. Verfahren zur Anpassung einer Kommunikationsverbindung (30,30',31,31') in einem Kommunikationsnetz,
mit einer ersten Netzeinheit (20,20'), einer zweiten Netzeinheit (21,21') und einer ersten Kommunikationsverbindung (30,30'),
wobei die erste Kommunikationsverbindung (30,30') eine erste Kanalkapazität (32) aufweist,
wobei wenigstens ein Datenpaket von der ersten (20,20') zur zweiten Netzeinheit (21,21') über die erste Kommunikationsverbindung (30,30') übertragen wird,
wobei das Datenpaket in der ersten Kommunikationsverbindung (30,30') eine Datenübertragungsrate (34,34') aufweist, wobei
in einem ersten Schritt eine Auslastung der ersten Kommunikationsverbindung (30,30') in Abhängigkeit von der ersten Kanalkapazität (32) und der Datenübertragungsrate (34,34') bestimmt wird, und der Auslastung ein Funktionswert zugeordnet wird,
eine zweite Kommunikationsverbindung (31,31') eine zweite Kanalkapazität (33,33') aufweist und
in einem zweiten Schritt
in Abhängigkeit vom Funktionswert von dem Kommunikationsnetz eine Reaktion (130) ausgeführt wird, wobei
bei der Reaktion (130) des Kommunikationsnetzes auf den Funktionswert ein Informationssatz (121) berücksichtigt wird, wobei insbesondere der Informationssatz (121) mindestens eine der folgenden Größen aufweist:
die verfügbaren ersten (30,30') und/oder zweiten Kommunikationsverbindungen (31,31'), die erste (32) und/oder die zweite Kanalkapazität (33,33'), die Datenübertragungsrate (34,34') oder ein Maß für eine Verbindungsqualität In den Kommunikationsverbindungen (30,30',31,31'),
wobei als Reaktion (130) entweder
(a) die erste Kommunikationsverbindung (30,30') und die erste Kanalkapazität (32) beibehalten wird, oder
(b) die erste Kommunikationsverbindung (30,30') beibehalten wird, wobei die erste Kanalkapazität (32) verändert wird, oder
(c) die zweite Kommunikationsverbindung (31, 31') für die Übertragung des Datenpakets gewählt wird,
**dadurch gekennzeichnet, dass**
die erste Kommunikationsverbindung (30,30') und die zweite Kommunikationsverbindung (31,31') unterschiedliche Techniken für die Übertragung von Daten anwenden und die zweite Kommunikationsverbindung (31,31') eine deutliche höhere zweite Kanalkapazität (33,33') besitzt.

2. Verfahren nach Anspruch 1,
**dadurch gekennzeichnet,**
**dass** der Funktionswert vordefinierte Werte (111,112, 113) aufweist.

3. Verfahren nach einem der Ansprüche 1 oder 2,
**dadurch gekennzeichnet,**
**dass** die Reaktion (130) des Kommunikationsnetzes auf die Funktionswerte vordefiniert ist.

4. Verfahren nach einem der Ansprüche 1 oder 2,
**dadurch gekennzeichnet,**
**dass** die Reaktion (130) des Kommunikationsnetzes auf die Funktionswerte dynamisch ist.

5. Verfahren nach einem der vorhergehenden Ansprüche,
**dadurch gekennzeichnet,**
**dass** der Informationssatz (121) eine identität und/oder eine zugeordnete Eigenschaft eines Nutzers der ersten (30,30') und/oder zweiten Kommunikationsverbindung (31,31') enthält.

6. Verfahren nach einem der vorhergehenden Ansprüche,
**dadurch gekennzeichnet,**
**dass** die erste (32) und/oder die zweite Kanalkapazität (33,33') vergrößerbar oder verkleinerbar sind.

7. Verfahren nach einem der vorhergehenden Ansprüche,
**dadurch gekennzeichnet,**
**dass** die Auslassung mit einem oberen Grenzwert und einem unteren Grenzwert der ersten Kanalkapazität (32) verglichen (102) wird und Je nachdem, ob die Auslastung Innerhalb oder außerhalb der Grenzwerte liegt, der entsprechende Funktionswert bestimmt wird.

8. Verfahren nach Anspruch 7,
**dadurch gekennzeichnet,**
**dass** in dem zweiten Schritt
(1) bei einer Auslastung oberhalb des oberen Grenzwertes die erste Kanalkapazität (32) der ersten Kommunikationsverbindung (30,30') erhöht wird oder die zweite Kommunikationsverbindung (31,31') mit der zweiten Kanalkapazität (33,33') für die Übertragung des Datenpakets betrieben wird, wobei die zweite Kanalkapazität (33,33') größer als die erste Kanalkapazität (32) ist, oder
(2) bei einer Auslastung unterhalb des unteren Grenzwertes die erste Kanalkapazität (32) der ersten Kommunikationsverbindung (30,30') verringert wird oder die zweite Kommunikationsverbindung (31,31') mit der zweiten Kanalkapazität (33,33') für die Übertragung des Datenpakets betrieben wird, wobei die zweite Kanalkapazität (33,33') kleiner als die erste Kanalkapazität (32) ist, oder
(3) bei einer Auslastung, die zwischen den Grenzwerten liegt, weder die erste Kanalkapazität (32) noch die erste Kommunikationsverbindung (30,30') verändert wird oder die zweite Kommunikationsverbindung (31,31') mit der zweiten Kanalkapazität (33,33') für die Übertragung des Datenpakets betrieben wird.

9. Verfahren nach einem der vorhergehenden Ansprüche,
**dadurch gekennzeichnet,**
**dass** das Kommunikationsnetz ein Telekommunikationsnetz ist, wobei das Kommunikationsnetz kabelgebundene und/oder drahtlose Kommunikationsverbindungen (30,30',31,31') aufweist, wobei die kabelgebundenen Kommunikationsverblndungen (30,30',31,31') eine ISDN, Integrated Services Digital Network, und/oder DSL, Digital Subscriber Line, Technik aufweist.

10. Verfahren nach Anspruch 9,
**dadurch gekennzeichnet,**
**dass** das Kommunikationsnetz ein Mobilfunknetz ist, wobei insbesondere die drahtlosen Kommunikationsverbindung (30,30',31,31') mindestens eine der folgenden Techniken aufweist: WLAN, 3GPP, 2G-GSM, 3G-UMTS, 3GPP-LTE, WiMAX, FLASH-OFDM oder 3GPP2.

11. Verfahren nach einem der vorhergehenden Ansprüche,
**dadurch gekennzeichnet,**
**dass** die erste Netzeinheit (20,20') ein Zugangsnetz (Access Network) und die zweite Netzeinheit (21,21') ein Benutzerendgerät (User Equipment, UE) ist oder dass die erste Netzeinheit (20,20') ein Kernetz (Core Network, CN) und die zweite Netzeinheit (21,21') ein Zugangsnetz (Access Network) ist.

12. Verfahren nach einem der vorhergehenden Ansprüche,
**dadurch gekennzeichnet,**
**dass** die erste (20,20') und zweite Netzeinheit (21,21') innerhalb eines RSS, Radio Subsystem, insbesondere innerhalb eines BSS, Base Station Subsystem, angeordnet sind.

13. Verfahren nach einem der vorhergehenden Ansprüche,
**dadurch gekennzeichnet,**
**dass** die erste Netzeinheit (20,20') eine BTS, Base Transceiver Station, und die zweite Netzeinheit (21,21') ein Benutzerendgerät (User Equipment, UE) ist und/oder dass die erste Netzeinheit (20,20') ein BSC, Base Station Controller, und die zweite Netzeinheit (21,21') eine BTS ist

14. Verfahren nach einem der vorhergehenden Ansprüche,
**dadurch gekennzeichnet,**
**dass** bei der Bestimmung des Funktionswertes mindestens eine intrinsische und/oder eine extrinsische Variable berücksichtigt werden, wobei insbesondere die intrinsische Variable mindestens eine der folgenden Größen ist
eine Pufferspeichergröße, die genutzte erste oder zweite Kommunikationsverbindung (30,30',31,31'), die erste und/oder zweite Kanalkapazität (32,33,33'), die Datenübertragungsrate (34,34') oder eine Verbindungsqualität
und die extrinsische Variable wenigstens eine der folgenden Größen ist:
die zugeordnete Eigenschaft des Nutzers, eine Verlustrate, eine Genauigkeitsschwankung in einem Übertragungstakt oder eine Verzögerungszeit.

15. Vorrichtung zur Anpassung einer Kommunikationsverbindung (31,31') in einem Kommunikationsnetz,
mit einer ersten Kommunikationsverbindung (30,30'), wobei wenigstens ein Datenpaket über die erste Kommunikationsverbindung (30,30') übertragbar ist,
das Datenpaket in der ersten Kommunikationsverbindung (30,30') eine Datenübertragungsrate (34,34') aufweist,
die Vorrichtung dazu eingerichtet ist, eine erste Kanalkapazität (32) und die Datenübertragungsrate (34,34') der ersten Kommunikationsverbindung (30,30') zu messen.
ein Rechnermittel (210) dazu eingerichtet ist, eine Auslastung der ersten Kommunikationsverbindung (30,30') In Abhängigkelt von der ersten Kanalkapazität (32) und der Datenübertragungsrate (34,34') zu bestimmen und der Auslastung einen Funktionswert zuzuordnen.
eine zweite Kommunikationsverbindung (31,31') eine zweite Kanalkapazität (33,33') aufweist und
dass bei einer Reaktion (130) des Kommunikationsnetzes auf den Funktionswert ein Informationssatz (121) berücksichtigt wird, wobei insbesondere der Informationssatz (121) mindestens eine der folgenden Größen aufweist:
die verfügbaren ersten (30,30') und/oder zweiten Kommunikationsverbindungen (31,31'), die erste (32) und/oder die zweite Kanalkapazität (33,33'), die Datenübertragungsrate (34,34') oder ein Maß für eine Verbindungsqualität in den Kommunikationsverbindungen (30,30',31,31')
und die Vorrichtung dazu eingerichtet ist, je nach Funktionswert entweder
(a) die erste Kommunikationsverbindung (30,30') und die erste Kanalkapazität (32) beizubehalten, oder
(b) die erste Kommunikationsverbindung (30,30') beizubehalten und die erste Kanalkapazität (32) zu verändern, oder
(c) die zweite Kommunikationsverbindung (31,31') für die Übertragung des Datenpakets zu wählen,
**dadurch gekennzeichnet, dass**
die erste Kommunikationsverbindung (30,30') und die zweite Kommunikationsverbindung (31,31') unterschiedliche Techniken für die Übertragung von Daten anwenden und die zweite Kommunikationsverbindung (31,31') eine deutliche höhere zweite Kanalkapazität (33,33') besitzt.

## Claims

1. A method of adapting a communication connection (30, 30', 31, 31') in a communications network,
with a first network unit (20, 20'), a second network unit (21, 21') and a first communication connection (30, 30'),
wherein the first communication connection (30, 30') has a first channel capacity (32), wherein at least one data packet is transmitted from the first network unit (20, 20') to the second network unit (21, 21') by way of the first communication connection (30, 30'),
wherein the data packet in the first communication connection (30, 30') has a data transmission rate (34, 34'), wherein
in a first step, a utilization capacity of the first communication connection (30, 30') is determined in a manner dependent upon the first channel capacity (32) and the data transmission rate (34, 34'), and a functional value is assigned to the utilization capacity,
a second communications connection (31, 31') has a second channel capacity (33; 33') and
in a second step
a reaction (130) is carried out in a manner dependent upon the functional value of the communications network, wherein
an information record (121) is taken into consideration in the reaction (130) of the communications network upon the functional value, wherein the information record (121) has, in particular, at least one of the following magnitudes:
the available first communication connections (30, 30') and/or second communication connection (31, 31'), the first channel capacity (32) and/or the second channel capacity (33, 33'), the data transmission rate (34, 34') or a measure of a connection quality in the communication connections (30, 30', 31, 31'),
wherein as the reaction (130) either
(a) the first communication connection (30, 30') and the first channel capacity (32) are retained, or
(b) the first communication connection (30, 30') is retained, wherein the first channel capacity (32) is changed, or
(c) the second communication connection (31, 31') is selected for the transmission of the data packet,
**characterized in that**
the first communication connection (30, 30') and the second communication connection (31, 31') use different technologies for the transmission of data and the second communication connection (31, 31') has a significantly higher second channel capacity (33,33').

2. A method according to Claim 1,
**characterized in that**
the functional value has pre-defined values (111, 112, 113).

3. A method according to one of Claims 1 or 2,
**characterized in that**
the reaction (130) of the communications network upon the functional values is pre-defined.

4. A method according to one of Claims 1 or 2,
**characterized in that**
the reaction (130) of the communications network upon the functional values is dynamic.

5. A method according to any one of the preceding Claims,
**characterized in that**
the information record (121) contains an identity and/or an assigned characteristic of a user of the first communication connection (30, 30') and/or the second communication connection (31, 31').

6. A method according to any one of the preceding Claims,
**characterized in that**
the first channel capacity (32) and/or the second channel capacity (33, 33) is or are capable of being increased or reduced.

7. A method according to any one of the preceding Claims,
**characterized in that**
the utilization capacity is compared (102) with an upper threshold value and a lower threshold value of the first channel capacity (32) and the corresponding functional value is determined depending upon whether the utilization capacity is inside or outside the threshold values.

8. A method according to Claim 7,
**characterized in that**
in the second step:
(1) with a utilization capacity above the upper threshold value the first channel capacity (32) of the first communication connection (30, 30') is increased or the second communication connection (31, 31') is operated with the second channel capacity (33, 33') for the transmission of the data packet, wherein the second channel capacity (33, 33') is greater than the first channel capacity (32), or
(2) with a utilization capacity below the lower threshold value the first channel capacity (32) of the first communication connection (30, 30') is reduced or the second communication connection (31, 31') is operated with the second channel capacity (33, 33') for the transmission of the data packet, wherein the second channel capacity (33, 33') is smaller than the first channel capacity (32), or
(3) with a utilization capacity which is between the threshold values neither the first channel capacity (32) nor the first communication connection (30, 30') is changed or the second communication connection (31, 31') is operated with the second channel capacity (33, 33') for the transmission of the data packet.

9. A method according to any one of the preceding Claims,
**characterized in that**
the communications network is a telecommunications network, wherein the communications network has cable and/or wireless communication connections (30, 30', 31, 31'), wherein the cable communication connections (30, 30', 31, 31') have an ISDN, integrated services digital network, and/or DSL, digital subscriber line, technology.

10. A method according to Claim 9,
**characterized in that**
the communications network is a mobile telephone network, wherein, in particular, the wireless communication connection (30, 30', 31, 31') has at least one of the following technologies: WLAN, 3GPP, 2G-GSM, 3G-UMTS, 3G-UMTS, 3GPP-LTE, WiMAX, FLASH-OFDM or 3GPP2.

11. A method according to any one of the preceding Claims,
**characterized in that**
the first network unit (20, 20') is an access network and the second network unit-(21, 21') is a computer terminal (user equipment, UE), or the first network unit (20, 20') is a core network (CN) and the second network unit (21, 21') is an access network.

12. A method according to any one of the preceding Claims,
**characterized in that**
the first network unit (20, 20') and the second network unit (21, 21') are arranged inside an RSS, radio sub-system, in particular inside a BSS, base station sub-system.

13. A method according to any one of the preceding Claims,
**characterized in that**
the first network unit (20, 20') is a BTS, base transceiver station, and the second network unit (21, 21') is a computer terminal (user equipment, UE), and/or the first network unit (20, 20') is a BSC, base station controller, and the second network unit (21, 21') is a BTS.

14. A method according to any one of the preceding Claims,
**characterized in that**
at least one intrinsic and/or one extrinsic variable is or are taken into consideration in the determination of the functional value, wherein, in particular, the intrinsic variable is at least one of the following magnitudes:
a buffer store size, the used first or second communication connection (30, 30', 31, 31'), the first and/or second channel capacity (32, 33, 33'), the data transmission rate (34, 34') or a connection quality
and the extrinsic variable is at least one of the following magnitudes:
the assigned characteristic of the user, a loss rate, a fluctuation in accuracy in the transmission clock time or a delay time.

15. An apparatus for adapting a communication connection (31, 31') in a communication network,
with a first communication connection (30, 30'), wherein
at least one data packet is capable of being transmitted by way of the first communication connection (30, 30'),
the data packet in the first communication connection (30, 30') has a data transmission rate (34, 34'),
the apparatus is set up to measure a first channel capacity (32) and the data transmission rate (34, 34') of the first communication connection (3 0, 30'),
a calculator means (210) is set up to determine a utilization capacity of the first communication connection (30, 30') in a manner dependent upon the first channel capacity (32) and the data transmission rate (34, 34') and to assign a functional value to the utilization capacity,
a second communication connection (31, 31') has a second channel capacity (33, 33') and
an information record (121) is taken into consideration in the reaction (130) of the communications network upon the functional value, wherein the information record (121) has, in particular, at least one of the following magnitudes:
the available first communication connection (30, 30') and/or second communication connection (31, 31'), the first channel capacity (32) and/or the second channel capacity (33, 33'), the data transmission rate (34, 34') or a measure of a connection quality in the communication connections (30, 30', 31, 31'),
and the apparatus is set up, depending upon the functional value, either
(a) to retain the first communication connection (30, 30') and the first channel capacity (32), or
(b) to retain the first communication connection (30, 30') and to change the first channel capacity (32), or
(c) to select the second communication connection (31, 31') for the transmission of the data packet,
**characterized in that**
the first communication connection (30, 30') and the second communication connection (31, 31') use different technologies for the transmission of data and the second communication connection (31, 31') has a significantly higher second channel capacity (33, 33').

## Revendications

1. Procédé d'adaptation d'une liaison de communication (30, 30', 31, 31') dans un réseau de communication,
avec une première unité de réseau (20, 20'), une deuxième unité de réseau (21, 21') et une première liaison de communication (30, 30'),
la première liaison de communication (30, 30') présentant une première capacité de canal (32),
au moins un paquet de données étant transmis de la première (20, 20') à la deuxième unité de réseau (21, 21') via la première liaison de communication (30, 30'),
le paquet de données présentant une vitesse de transmission de données (34, 34') dans la première liaison de communication (30, 30'), dans lequel procédé dans une première étape, une charge de la première liaison de communication (30, 30') est déterminée en fonction de la première capacité de canal (32) et de la vitesse de transmission de données (34, 34') et une valeur de fonction est associée à la charge,
une deuxième liaison de communication (31, 31') présentant une deuxième capacité de canal (33, 33') et
dans une deuxième étape,
une réaction (130) est déclenchée par le réseau de communication en fonction de la valeur de fonction,
un jeu d'informations (121) étant pris en compte lors de la réaction (130) du réseau de communication à la valeur de fonction, le jeu d'informations (121) présentant en particulier au moins une des grandeurs suivantes :
les première (30, 30') et/ou deuxième liaisons de communication (31, 31') disponibles, la première (32) et/ou la deuxième capacité de canal (33, 33'), la vitesse de transmission de données (34, 34') ou une mesure d'une qualité de liaison dans les liaisons de communication (30, 30', 31, 31'),
la réaction (130) consistant soit
(a) à conserver la première liaison de communication (30, 30') et la première capacité de canal (32), soit
(b) à conserver la première liaison de communication (30, 30') et modifier la première capacité de canal (32), soit
(c) à choisir la deuxième liaison de communication (31, 31') pour la transmission du paquet de données,
**caractérisé en ce que**
la première liaison de communication (30, 30') et la deuxième liaison de communication (31, 31') utilisent des techniques différentes pour la transmission de données et la deuxième liaison de communication (31, 31') possède une deuxième capacité de canal (33, 33') nettement plus élevée.

2. Procédé selon la revendication 1,
**caractérisé en ce**
**que** la valeur de fonction présente des valeurs prédéfinies (111, 112, 113).

3. Procédé selon une des revendications 1 ou 2,
**caractérisé en ce**
**que** la réaction (130) du réseau de communication aux valeurs de fonction est prédéfinie.

4. Procédé selon une des revendications 1 ou 2,
**caractérisé en ce**
**que** la réaction (130) du réseau de communication aux valeurs de fonction est dynamique.

5. Procédé selon une des revendications précédentes,
**caractérisé en ce**
**que** le jeu d'informations (121) contient une identité et/ou une propriété associée d'un utilisateur de la première (30, 30') et/ou de la deuxième liaison de communication (31, 31').

6. Procédé selon une des revendications précédentes,
**caractérisé en ce**
**que** la première (32) et/ou la deuxième capacité de canal (33, 33') peuvent être augmentées ou diminuées.

7. Procédé selon une des revendications précédentes,
**caractérisé en ce**
**que** la charge est comparée (102) à une valeur limite supérieure et une valeur limite inférieure de la première capacité de canal (32) et, selon que la charge se situe à l'intérieur ou à l'extérieur des valeurs limites, la valeur de fonction correspondante est déterminée.

8. Procédé selon la revendication 7,
**caractérisé en ce**
**que** dans la deuxième étape,
(1) si la charge se situe au-dessus de la valeur limite supérieure, la première capacité de canal (32) de la première liaison de communication (30, 30') est augmentée ou la deuxième liaison de communication (31, 31') est utilisée avec la deuxième capacité de canal (33, 33') pour la transmission du paquet de données, la deuxième capacité de canal (33, 33') étant supérieure à la première capacité de canal (32), ou
(2) si la charge se situe au-dessous de la valeur limite inférieure, la première capacité de canal (32) de la première liaison de communication (30, 30') est diminuée ou la deuxième liaison de communication (31, 31') utilisée avec la deuxième capacité de canal (33, 33') pour la transmission du paquet de données, la deuxième capacité de canal (33, 33') étant inférieure à la première capacité de canal (32), ou
(3) si la charge se situe entre les valeurs limites, ni la première capacité de canal (32) ni la première liaison de communication (30, 30') n'est modifiée ou la deuxième liaison de communication (31, 31') est utilisée avec la deuxième capacité de canal (33, 33') pour la transmission du paquet de données.

9. Procédé selon une des revendications précédentes,
**caractérisé en ce**
**que** le réseau de communication est un réseau de télécommunication, le réseau de communication présentant des liaisons de communication (30, 30', 31, 31') par câble et/ou sans fil, les liaisons de communication (30, 30', 31, 31') par câble présentant une technique ISDN, Integrated Services Digital Network, et/ou DSL, Digital Subscriber Line.

10. Procédé selon la revendication 9,
**caractérisé en ce**
**que** le réseau de communication est un réseau de téléphonie mobile, les liaisons de communication (30, 30, 31, 31') sans fil présentant en particulier au moins une des techniques suivantes : WLAN, 3GPP, 2G-GSM, 3G-UMTS, 3GPP-LTE, WiMAX, FLASH-OFDM ou 3GPP2.

11. Procédé selon une des revendications précédentes,
**caractérisé en ce**
**que** la première unité de réseau (20, 20') est un réseau d'accès (Access Network) et la deuxième unité de réseau (21, 21') un terminal d'utilisateur (User Equipment, UE) ou que la première unité de réseau (20, 20') est un réseau coeur (Core Network, CN) et la deuxième unité de réseau (21, 21') un réseau d'accès (Access Network).

12. Procédé selon une des revendications précédentes,
**caractérisé en ce**
**que** la première (20, 20') et la deuxième unité de réseau (21, 21') sont disposées au sein d'un RSS, Radio Subsystem, en particulier au sein d'un BSS, Base Station Subsystem.

13. Procédé selon une des revendications précédentes,
**caractérisé en ce**
**que** la première unité de réseau (20, 20') est une BTS, Base Transceiver Station, et la deuxième unité de réseau (21, 21') un terminal utilisateur (User Equipment, UE) et/ou que la première unité de réseau (20, 20') est un BSC, Base Station Controller, et la deuxième unité de réseau (21, 21') une BTS.

14. Procédé selon une des revendications précédentes,
**caractérisé en ce**
**que** lors de la détermination de la valeur de fonction, il est tenu compte d'au moins une variable intrinsèque et/ou extrinsèque, en particulier la variable intrinsèque étant au moins une des grandeurs suivantes :
une taille de mémoire tampon, la première ou deuxième liaison de communication (30, 30', 31, 31') utilisée, la première et/ou deuxième capacité de canal (32, 33, 33'), la vitesse de transmission de données (34, 34') ou une qualité de liaison
et la variable extrinsèque étant au moins une des grandeurs suivantes :
la propriété associée de l'utilisateur, un taux de perte, une fluctuation de précision dans une horloge de transmission ou une temporisation.

15. Dispositif d'adaptation d'une liaison de communication (31, 31') dans un réseau de communication,
avec une première liaison de communication (30, 30'),
au moins un paquet de données pouvant être transmis via la première liaison de communication (30, 30'),
le paquet de données présentant une vitesse de transmission de données (34, 34') dans la première liaison de communication (30, 30'),
le dispositif étant conçu pour mesurer une première capacité de canal (32) et la vitesse de transmission de données (34, 34') de la première liaison de communication (30, 30'),
un moyen de calcul (210) étant conçu pour déterminer une charge de la première liaison de communication (30, 30') en fonction de la première capacité de canal (32) et de la vitesse de transmission de données (34, 34') et associer une valeur de fonction à la charge,
une deuxième liaison de communication (31, 31') présentant une deuxième capacité de canal (33, 33') et
que lors d'une réaction (130) du réseau de communication à la valeur de fonction, il est tenu compte d'un jeu d'informations (121), le jeu d'informations (121) présentant en particulier au moins une des grandeurs suivantes :
les première (30, 30') et/ou deuxième liaisons de communication (31, 31') disponibles, la première (32) et/ou la deuxième capacité de canal (33, 33'), la vitesse de transmission de données (34, 34') ou une mesure d'une qualité de liaison dans les liaisons de communication (30, 30', 31, 31'),
et le dispositif étant conçu pour, en fonction de la valeur de fonction, soit
(a) conserver la première liaison de communication (30, 30') et la première capacité de canal (32), soit
(b) conserver la première liaison de communication (30, 30') et modifier la première capacité de canal (32), soit
(c) choisir la deuxième liaison de communication (31, 31') pour la transmission du paquet de données,
**caractérisé en ce que**
la première liaison de communication (30, 30') et la deuxième liaison de communication (31, 31') utilisent des techniques différentes pour la transmission de données et la deuxième liaison de communication (31, 31') possède une deuxième capacité de canal (33, 33') nettement plus élevée.
